# EUROPEAN PATENT APPLICATION

(11) **EP 4 645 991 A1**
(43) Date of publication of application: **05.11.2025**
(21) Application number: 22969872.5
(22) Date of filing: 30.12.2022
(51) Int. Cl.: H04W 72/21

(54) **POWER INFORMATION REPORTING METHOD AND APPARATUS, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/144314
(87) International publication number: WO 2024/138732

(57) **Abstract**

The present disclosure relates to the technical field of communications, and relates to a power information reporting method and apparatus, and a storage medium, which are used for improving the scheduling efficiency of a terminal. The method comprises: when a network device predefines or configures a terminal to report a plurality of power headroom reports (PHRs), determining power domain enhancement information of a plurality of carriers/cells under a carrier aggregation (CA) or dual connection (DC) configuration; and enhancing the power domain enhancement information of the plurality of carriers/cells by means of a PHR of a media access control control element (MAC-CE), and then reporting the enhanced power domain enhancement information.

## Description

### FIELD

The present disclosure relates to the field of communication technologies, and in particular relates to a method and an apparatus for reporting power information and a storage medium.

### BACKGROUND

In the new radio (NR) technology, carrier aggregation (CA) and dual connection (DC) are supported for terminals with dual power amplifiers (PA). With these configurations, the terminal can send uplink physical channels or reference signals on multiple carriers at the same time.

In uplink CA and DC, the maximum transmit power of a terminal in a band combination (BC) is limited by the power class of the terminal defined in the BC. High power user equipments (HPUEs) are supported in the related art so as to better utilize the independent PA of the terminal to achieve higher transmit power.

However, when the terminal actually performs an uplink transmission, the actual transmit power in different frequency ranges will be limited due to specific absorption rate (SAR) and maximum permissible exposure (MPE) requirements. At the same time, the transmit power adjustment based on the SAR and MPE requirements will also cause large fluctuations or interruptions in the transmit power. These power limitations, power adjustments, and whether the HPUE can achieve a high-power transmission have a significant impact on the scheduling performed by a network device.

### SUMMARY

In order to overcome the problems existing in the related art, the present disclosure provides a method and an apparatus for reporting power information and a storage medium.

According to a first aspect of embodiments of the present disclosure, there is provided a method for reporting power information, performed by a terminal and including: determining power domain enhancement information of multiple carriers/cells with a carrier aggregation (CA) or dual connection (DC) configuration in a case where a network device predefines or configures the terminal to report multiple power headroom reports (PHRs); and reporting the power domain enhancement information of the multiple carriers/cells via a PHR from a media-access-control control element (MAC-CE) in an enhanced manner.

In an implementation, the power domain enhancement information at least includes maximum power reduction (MPR) information of the multiple carriers/cells, and the MPR information is determined based on specific absorption rate (SAR) requirements or maximum permissible exposure (MPE) requirements.

In an implementation, the power domain enhancement information includes one of following combinations of the MPR information of the multiple carriers/cells: the MPR information determined based on the SAR requirements and the MPR information determined based on the SAR requirements; the MPR information determined based on the SAR requirements and the MPR information determined based on the MPE requirements; or the MPR information determined based on the MPE requirements and the MPR information determined based on the MPE requirements.

In an implementation, the power domain enhancement information of the multiple carriers/cells is carried in multiple PHRs, and each PHR in the multiple PHRs corresponds to one carrier/cell in the multiple carriers/cells; and the power domain enhancement information carried in each PHR in the multiple PHRs includes: a power headroom (PH) value or a PH mapping value, MPR information, and maximum transmit power information corresponding to a power class (PC) of the terminal, the maximum transmit power information including a maximum transmit power value, a maximum transmit power mapping value, or a maximum transmit power change adjustment amount.

In an implementation, the multiple PHRs are carried in a single MAC-CE signaling.

In an implementation, the multiple PHRs are carried in multiple MAC-CE signalings, and each MAC-CE signaling corresponds to one PHR.

In an implementation, the PH value or the PH mapping value is calculated based on a physical uplink shared channel (PUSCH) on which a corresponding carrier or cell actually performs a transmission, or based on a PUSCH reference configuration of a corresponding carrier or cell.

In an implementation, the MPR information is carried in a first indication field of the PHR, and a second indication field of the PHR indicates whether a SAR-based MPR reporting occurs, in response to the MPR information being determined based on the SAR requirements.

In an implementation, the first indication field is an MPE indication field or a newly added indication field of the PHR.

In an implementation, the second indication field is a P indication field, a reserved indication field or a newly added indication field of the PHR.

In an implementation, the maximum transmit power information corresponding to the power class of the terminal includes: maximum transmit power information of each corresponding carrier/cell with the CA or DC configuration.

In an implementation, the method further includes reporting information of a carrier or cell whose transmit power class changes.

In an implementation, the information of the carrier/cell whose transmit power class changes is reported based on the PHR.

In an implementation, the information of the carrier/cell whose transmit power class changes is carried in a redefined indication field, a reserved indication field, or a newly added indication field of the PHR.

In an implementation, the newly added indication field indicates a PC change status of each carrier/cell with a code point or a bitmap.

According to a second aspect of embodiments of the present disclosure, there is provided a method for reporting power information, performed by a network device and including: receiving power domain enhancement information of multiple carriers/cells reported by a terminal in an enhanced manner via a power headroom report (PHR) of an MAC-CE in a case where the network device predefines or configures the terminal to report multiple PHRs.

In an implementation, the power domain enhancement information at least includes maximum power reduction (MPR) information of the multiple carriers/cells, and the MPR information is determined based on specific absorption rate (SAR) requirements or maximum permissible exposure (MPE) requirements.

In an implementation, the power domain enhancement information includes one of following combinations of the MPR information of the multiple carriers/cells: the MPR information determined based on the SAR requirements and the MPR information determined based on the SAR requirements; the MPR information determined based on the SAR requirements and the MPR information determined based on the MPE requirements; or the MPR information determined based on the MPE requirements and the MPR information determined based on the MPE requirements.

In an implementation, the power domain enhancement information of the multiple carriers/cells is carried in multiple PHRs, and each PHR in the multiple PHRs corresponds to one carrier/cell in the multiple carriers/cells; and the power domain enhancement information carried in each PHR in the multiple PHRs includes: a power headroom (PH) value or a PH mapping value, MPR information, and maximum transmit power information corresponding to a power class (PC) of the terminal, the maximum transmit power information including a maximum transmit power value, a maximum transmit power mapping value, or a maximum transmit power change adjustment amount.

In an implementation, the multiple PHRs are carried in a single MAC-CE signaling.

In an implementation, the multiple PHRs are carried in multiple MAC-CE signalings, and each MAC-CE signaling corresponds to one PHR.

In an implementation, the PH value or the PH mapping value is calculated based on a physical uplink shared channel (PUSCH) on which a corresponding carrier or cell actually performs a transmission, or based on a PUSCH reference configuration of a corresponding carrier or cell.

In an implementation, the MPR information is carried in a first indication field of the PHR, and a second indication field of the PHR indicates whether a SAR-based MPR reporting occurs, in response to the MPR information being determined based on the SAR requirements.

In an implementation, the first indication field is an MPE indication field or a newly added indication field of the PHR.

In an implementation, the second indication field is a P indication field, a reserved indication field or a newly added indication field of the PHR.

In an implementation, the maximum transmit power information corresponding to the power class of the terminal includes: maximum transmit power information of each corresponding carrier/cell with the CA or DC configuration.

In an implementation, the method further includes receiving information of a carrier or cell whose transmit power class changes that is sent by the terminal.

In an implementation, the information of the carrier/cell whose transmit power class changes is reported based on the PHR.

In an implementation, the information of the carrier/cell whose transmit power class changes is carried in a redefined indication field, a reserved indication field, or a newly added indication field of the PHR.

In an implementation, the newly added indication field indicates a PC change status of each carrier/cell with a code point or a bitmap.

According to a third aspect of embodiments of the present disclosure, there is provided an apparatus for reporting power information, applied to a terminal and including a determining module and a sending module. The determining module is configured to determine power domain enhancement information of multiple carriers/cells with a carrier aggregation (CA) or dual connection (DC) configuration in a case where a network device predefines or configures the terminal to report multiple power headroom reports (PHRs). The sending module is configured to report the power domain enhancement information of the multiple carriers/cells via a PHR from an MAC-CE in an enhanced manner.

In an implementation, the power domain enhancement information at least includes maximum power reduction (MPR) information of the multiple carriers/cells, and the MPR information is determined based on specific absorption rate (SAR) requirements or maximum permissible exposure (MPE) requirements.

In an implementation, the power domain enhancement information includes one of following combinations of the MPR information of the multiple carriers/cells: the MPR information determined based on the SAR requirements and the MPR information determined based on the SAR requirements; the MPR information determined based on the SAR requirements and the MPR information determined based on the MPE requirements; or the MPR information determined based on the MPE requirements and the MPR information determined based on the MPE requirements.

In an implementation, the power domain enhancement information of the multiple carriers/cells is carried in multiple PHRs, and each PHR in the multiple PHRs corresponds to one carrier/cell in the multiple carriers/cells; and the power domain enhancement information carried in each PHR in the multiple PHRs includes: a power headroom (PH) value or a PH mapping value, MPR information, and maximum transmit power information corresponding to a power class (PC) of the terminal, the maximum transmit power information including a maximum transmit power value, a maximum transmit power mapping value, or a maximum transmit power change adjustment amount.

In an implementation, the multiple PHRs are carried in a single MAC-CE signaling.

In an implementation, the multiple PHRs are carried in multiple MAC-CE signalings, and each MAC-CE signaling corresponds to one PHR.

In an implementation, the PH value or the PH mapping value is calculated based on a physical uplink shared channel (PUSCH) on which a corresponding carrier or cell actually performs a transmission, or based on a PUSCH reference configuration of a corresponding carrier or cell.

In an implementation, the MPR information is carried in a first indication field of the PHR, and a second indication field of the PHR indicates whether a SAR-based MPR reporting occurs, in response to the MPR information being determined based on the SAR requirements.

In an implementation, the first indication field is an MPE indication field or a newly added indication field of the PHR.

In an implementation, the second indication field is a P indication field, a reserved indication field or a newly added indication field of the PHR.

In an implementation, the maximum transmit power information corresponding to the power class of the terminal includes: maximum transmit power information of each corresponding carrier/cell with the CA or DC configuration.

In an implementation, the sending module is configured to report information of a carrier or cell whose transmit power class changes.

In an implementation, the information of the carrier/cell whose transmit power class changes is reported based on the PHR.

In an implementation, the information of the carrier/cell whose transmit power class changes is carried in a redefined indication field, a reserved indication field, or a newly added indication field of the PHR.

In an implementation, the newly added indication field indicates a PC change status of each carrier/cell with a code point or a bitmap.

According to a fourth aspect of embodiments of the present disclosure, there is provided an apparatus for reporting power information, applied to a network device and including a receiving module. The receiving module is configured to receive power domain enhancement information of multiple carriers/cells reported by a terminal in an enhanced manner via a power headroom report (PHR) from an MAC-CE in a case where the network device predefines or configures the terminal to report multiple PHRs.

In an implementation, the power domain enhancement information at least includes maximum power reduction (MPR) information of the multiple carriers/cells, and the MPR information is determined based on specific absorption rate (SAR) requirements or maximum permissible exposure (MPE) requirements.

In an implementation, the power domain enhancement information includes one of following combinations of the MPR information of the multiple carriers/cells: the MPR information determined based on the SAR requirements and the MPR information determined based on the SAR requirements; the MPR information determined based on the SAR requirements and the MPR information determined based on the MPE requirements; or the MPR information determined based on the MPE requirements and the MPR information determined based on the MPE requirements.

In an implementation, the power domain enhancement information of the multiple carriers/cells is carried in multiple PHRs, and each PHR in the multiple PHRs corresponds to one carrier/cell in the multiple carriers/cells; and the power domain enhancement information carried in each PHR in the multiple PHRs includes: a power headroom (PH) value or a PH mapping value, MPR information, and maximum transmit power information corresponding to a power class (PC) of the terminal, the maximum transmit power information including a maximum transmit power value, a maximum transmit power mapping value, or a maximum transmit power change adjustment amount.

In an implementation, the multiple PHRs are carried in a single MAC-CE signaling.

In an implementation, the multiple PHRs are carried in multiple MAC-CE signalings, and each MAC-CE signaling corresponds to one PHR.

In an implementation, the PH value or the PH mapping value is calculated based on a physical uplink shared channel (PUSCH) on which a corresponding carrier or cell actually performs a transmission, or based on a PUSCH reference configuration of a corresponding carrier or cell.

In an implementation, the MPR information is carried in a first indication field of the PHR, and a second indication field of the PHR indicates whether a SAR-based MPR reporting occurs, in response to the MPR information being determined based on the SAR requirements.

In an implementation, the first indication field is an MPE indication field or a newly added indication field of the PHR.

In an implementation, the second indication field is a P indication field, a reserved indication field or a newly added indication field of the PHR.

In an implementation, the maximum transmit power information corresponding to the power class of the terminal includes: maximum transmit power information of each corresponding carrier/cell with the CA or DC configuration.

In an implementation, the receiving module is configured to receive information of a carrier or cell whose transmit power class changes that is sent by the terminal.

In an implementation, the information of the carrier/cell whose transmit power class changes is reported based on the PHR.

In an implementation, the information of the carrier/cell whose transmit power class changes is carried in a redefined indication field, a reserved indication field, or a newly added indication field of the PHR.

In an implementation, the newly added indication field indicates a PC change status of each carrier/cell with a code point or a bitmap.

According to a fifth aspect of embodiments of the present disclosure, there is provided a device for reporting power information, including: a processor and a memory for storing instructions executable by the processor, in which the processor is configured to perform the method in the first aspect and its implementations described above.

According to a sixth aspect of embodiments of the present disclosure, there is provided a device for reporting power information, including: a processor and a memory for storing instructions executable by the processor, in which the processor is configured to perform the method in the second aspect and its implementations described above.

According to a seventh aspect of embodiments of the present disclosure, there is provided a storage medium having stored therein instructions that, when executed by a processor of a terminal, cause the terminal to perform the method in the first aspect and its implementations described above.

According to an eighth aspect of embodiments of the present disclosure, there is provided a storage medium having stored therein instructions that, when executed by a processor of a network device, cause the network device to perform the method in the second aspect and its implementations described above.

The technical solution provided in the embodiments of the present disclosure may include the following advantageous effects. The terminal determines power domain enhancement information of multiple carriers/cells with a CA or DC configuration in the case where the network device predefines or configures the terminal to report multiple power headroom reports (PHRs), and reports the power domain enhancement information of the multiple carriers/cells via a PHR from an MAC-CE in an enhanced manner. Therefore, the network device can determine the power domain enhancement information of the multiple carriers/cells based on the PHR from the MAC-CE, so as to understand the behavior of the terminal, enable the network device to make better scheduling decisions, perform a scheduling that is more suitable for task transmission needs, improve the system throughput and user coverage, improve the system efficiency, and reduce ineffective scheduling. Furthermore, since the network device can obtain the power domain enhancement information of the multiple carriers/cells, it can schedule the terminal to achieve a higher power transmission based on the power domain enhancement information, thereby saving power for the terminal.

It is to be understood that both the foregoing general description and the following detailed description are illustrative and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating a wireless communication system according to an illustrative embodiment.
FIG. 2 is a schematic diagram illustrating the control over an accumulative transmit power of a terminal according to an illustrative embodiment.
FIG. 3 is a schematic diagram illustrating a power implementation according to an illustrative embodiment.
FIG. 4 is a schematic diagram illustrating a power implementation according to an illustrative embodiment.
FIG. 5 is a schematic diagram illustrating a power implementation according to an illustrative embodiment.
FIG. 6 is a schematic diagram illustrating a PHR configuration format under a single carrier according to an illustrative embodiment.
FIG. 7 is a schematic diagram illustrating a PHR configuration format under multiple carriers according to an illustrative embodiment.
FIG. 8 is a flow chart illustrating a method for reporting power information according to an illustrative embodiment.
FIG. 9 is a schematic diagram illustrating a bitmap according to an illustrative embodiment.
FIG. 10 is a flow chart illustrating a method for reporting power information according to an illustrative embodiment.
FIG. 11 is a block diagram illustrating an apparatus for reporting power information according to an illustrative embodiment.
FIG. 12 is a block diagram illustrating an apparatus for reporting power information according to an illustrative embodiment.
FIG. 13 is a block diagram illustrating a device for reporting power information according to an illustrative embodiment.
FIG. 14 is a block diagram illustrating a device for reporting power information according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure.

As described in the background, in the new radio (NR) technology, carrier aggregation (CA) and dual connection (DC) are supported for terminals with dual power amplifiers (PA). With these configurations, the terminal can send uplink physical channels or reference signals on multiple carriers at the same time.

In uplink CA and DC, the maximum transmit power of a terminal in a band combination (BC) is limited by the power class of the terminal defined in the BC. High power user equipments (HPUEs) are supported in the related art so as to better utilize the independent PA of the terminal to achieve higher transmit power.

However, when the terminal actually performs an uplink transmission, the actual transmit power in different frequency ranges will be limited due to specific absorption rate (SAR) and maximum permissible exposure (MPE) requirements. At the same time, the transmit power adjustment based on the SAR and MPE requirements will also cause large fluctuations or interruptions in the transmit power. These power limitations, power adjustments, and whether the HPUE can achieve a high-power transmission have a significant impact on the scheduling performed by a network device.

Therefore, allowing the network device to learn about power-related information of the terminal and understand the corresponding behavior of the terminal can support better scheduling decisions of the network device. Thus, how to realize the reporting of power information and the corresponding mechanism and signaling are problems that need to be solved.

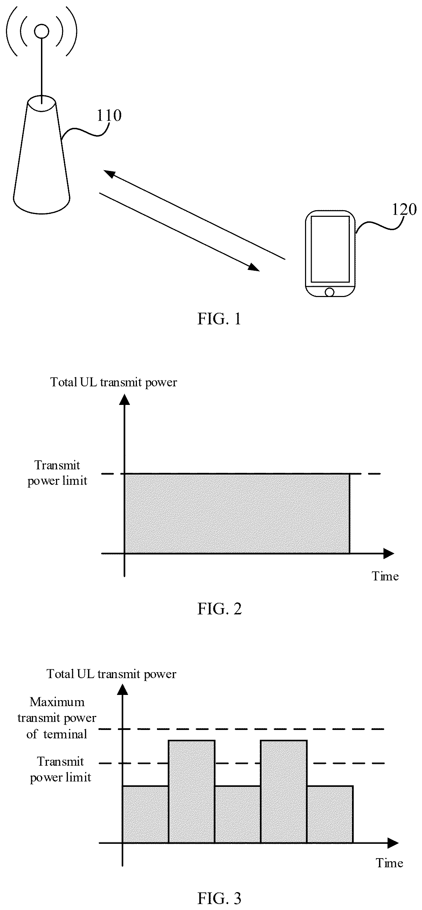

A method for reporting power information provided in the embodiments of the present disclosure may be performed by a wireless communication system illustrated in FIG. 1. The wireless communication system may include a network device 110 and a terminal 120. It may be understood that the wireless communication system shown in FIG. 1 is only for schematic illustration. The wireless communication system may also include other network devices, such as core network devices, wireless relay devices, and wireless backhaul devices, which are not shown in FIG. 1. The number of network devices and the number of terminals included in the wireless communication system are not limited in the embodiments of the present disclosure.

It may be further understood that the wireless communication system in the embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be divided into a 2nd generation (2G) network, a 3G network, a 4G network, or a future evolution network, such as a 5th generation wireless communication system (5G) network, which may also be referred to as a new radio (NR) network, according to the capacity, rate, delay, and other factors of different networks. For ease of description, a wireless communication network will be sometimes abbreviated as a network in the present disclosure.

Further, the network device 110 involved in the present disclosure may also be referred to as a radio access network device. The radio access network device may be a base station, an evolved node B, a home base station, an access point (AP) in a wireless fidelity (Wi-Fi) system, a wireless relay node, a wireless backhaul node, a transmission point (TP), a transmission and reception point (TRP), or the like, or may also be a generation NodeB (gNB) in an NR system, or may also be a component or a part of a device that constitutes a base station, or the like. The network device may also be a vehicle-mounted device when it is used in a vehicle to everything (V2X) communication system. It is to be understood that the specific technology and specific device form adopted by the network device are not limited in the embodiments of the present disclosure.

Further, the terminal 120 involved in the present disclosure, which may also be referred to as a terminal device, a user equipment (UE), a mobile station (MS), a mobile terminal (MT), or the like, is a device that provides voice and/or data connectivity to a user. For example, the terminal may be a handheld device with a wireless connection function, a vehicle-mounted device, or the like. At present, some examples of the terminal are a smart phone, a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in the embodiments of the present disclosure.

In the embodiments of the present disclosure, the network device 110 and the terminal 120 may use any feasible wireless communication technology to achieve mutual data transmissions. A transmission channel corresponding to data or control information sent by the network device 110 to the terminal 120 is called a downlink (DL) channel, and a transmission channel corresponding to data or control information sent by the terminal 120 to the network device 110 is called an uplink (UL) channel. It may be understood that the network device involved in the embodiments of the present disclosure may be a base station. Certainly, the network device may also be any other possible network device, and the terminal may be any possible terminal, which is not limited in the present disclosure.

In the new radio (NR) technology, carrier aggregation (CA) and dual connection (DC) are supported for terminals with dual power amplifiers (PA), and the maximum transmit power of the terminal will be affected by the power class (PC) defined for the terminal. Taking the power class defined for the terminal being PC2 as an example, the PA capabilities of the terminal in different bands may be different. For example, the power configuration of the terminal is shown in Table 1.

**Table 1**

| | Power class of terminal | NR X carrier power class | NR Y carrier power class |
|---|---|---|---|
| Combination *a* | 26dBm | 23dBm | 23dBm |
| Combination *b* | 26dBm | 23dBm | 26dBm |
| Combination *c* | 26dBm | 26dBm | 23dBm |
| Combination *d* | 26dBm | 26dBm | 26dBm |

The X carrier and the Y carrier represent different bands. It may be seen from Table 1 that if the power class of the terminal in one band is limited to 23 decibel milliwatts (dBm) and the power class of the terminal in another band is also limited to 23 dBm, the power class of the terminal is limited to a maximum value of 26 dBm. For example, for the cases of combination *b* and combination *c,* when the power class of the terminal in one band is limited to 23 dBm and the power class of the terminal in another band is limited to 26 dBm, the power class of the terminal can only reach a maximum value of 26 dBm due to relevant protocol specifications. However, in fact, the maximum transmit power of the terminal can reach 27.8 dBm when implemented with an independent PA of the terminal. For the case of combination *d,* it is specified in the relevant protocol that the power class of the terminal can only reach a maximum value of 26 dBm, but in fact the maximum transmit power of the terminal can reach 29 dBm when implemented with an independent PA of the terminal. That is, the maximum transmit power of the terminal will be limited by the power class of the terminal specified in the protocol. In R17 for increasing the terminal power cap for CA/DC, for a band combination where one band supports a power class up to PC3 (23 dBm) and another band supports a power class up to PC2 (26 dBm), it may be assumed that the total power associated with the band combination is the sum of the individual power classes.

In the related art, a new capability signaling - maximum output power capability signaling - is introduced for each band combination. This signaling is mainly enhanced in R17 and is applicable to terminals whose capability level supports PC3 in one band and supports PC2 in another band with the CA configuration. The band may be a band using time division duplexing (TDD) or frequency division duplexing (FDD). The terminal can take advantage of the new maximum output power capability, using the maximum combined power from the two PAs to be 27.8dBm.

In some technologies, the key to achieving simultaneous transmission across multiple bands is that the terminal needs to comply with corresponding regulatory constraints when participating in uplink transmissions. Regulatory constraints on the overall radio frequency (RF) exposure experienced by users require the terminal to determine a safe transmit power level for each band, i.e., an RF exposure level. When the terminal approaches or exceeds the permitted RF exposure level, the terminal needs to recalculate the maximum permitted transmit power for each band in use, and uplink transmissions may also result in changes in transmit power. Certainly, in some cases, the terminal may set its transmit power to have a fixed limit, so that the terminal never exceeds the limit on the RF exposure level.

However, the changes in the transmit power of the terminal are transparent to the network device, that is, the network device is not aware of the reasons for the changes in the transmit power of the terminal, and these will affect the perception of link quality by network device and affect link adaptation, which may subsequently cause fluctuations in the uplink throughput. Apparently, allowing the network device to better understand these constraints and their impact on the behavior of the terminal can help the network device make more detailed and accurate scheduling decisions.

Currently, two types of RF exposure level limit indicators are available, depending on the combination of bands. One method is to use the specific absorption rate (SAR) as a measurement indicator, which is mainly applicable to bands below 6 GHz, such as frequency range (FR) 1. Another method is to measure a power density (PD) and calculate the maximum permissible exposure (MPE) as a measurement indicator. This type of standard is mainly used in millimeter wave bands, such as FR2. The above indicators all use a time-average approach to limit the RF exposure. That is, the average RF exposure measured using the above indicators and within a specific event window must remain below a certain threshold. However, it is worth noting that an average RF exposure is specified in the protocol, rather than an instantaneous RF exposure. Certainly, there may be some exceptions in certain areas. The time-averaged nature of the above constraints is a rather important aspect when a high power transmission is implemented at the terminal. This shows that although it is impossible for the terminal to perform transmissions at full power all the time in all bands, the terminal can perform transmissions at a higher transmit power for a short period of time.

When the terminal performs an uplink transmission, it will determine the maximum uplink duty cycle (max UL duty cycle) that the terminal can support within an uplink evaluation period according to the SAR/MPE requirements in the initial stage of access, and report it to the network device. After the communication connection is established, the network device will configure the terminal specifically according to the maximum uplink duty cycle reported by the terminal, that is, the maximum uplink duty cycle value *maxULdutycycle* used in subsequent transmissions. During the uplink evaluation period, the terminal controls the actual uplink transmission according to the transmission symbol ratio corresponding to the maximum UL duty cycle configured by the network device, and the resulting adjustment is transparent to the network device. At the same time, due to the relevant regulations of some countries/regions, SAR/MPE mandatory radiation exposure requirements may be specified for terminals in different bands. The terminal meets the SAR/MPE requirements when actual transmissions meet the UL duty cycle requirements of transmission during the uplink evaluation period. For example, FIG. 2 shows a schematic diagram of the control over an accumulative transmit power of the terminal. It may be seen that the total transmit power of the terminal within one UL duty cycle is shown in the gray area, which needs to meet the transmit power limit. The transmit power limit may be a power limit (SAR limit) determined for the terminal on the carrier/cell to meet SAR/MPE requirements, for example, 23 dBm. In FIG. 2, it is maintained that an average transmit power of the terminal meets the transmit power limit within the UL duty cycle. In fact, the transmit power of the terminal may be lower than the transmit power limit in some transmit time slots, and may be higher than the transmit power limit in other transmit time slots, for example, the power implementation diagram shown in FIG. 3. As may be seen from FIG. 3, it is only needed for the terminal to ensure that the average transmit power on the transmission symbol corresponding to the actual UL duty cycle ratio within the uplink evaluation period does not exceed the transmit power limit. Certainly, although the instantaneous transmit power in a certain time slot may exceed the transmit power limit, it still needs to meet the requirement of the maximum transmit power of the terminal, that is, it cannot exceed the maximum transmit power of the terminal.

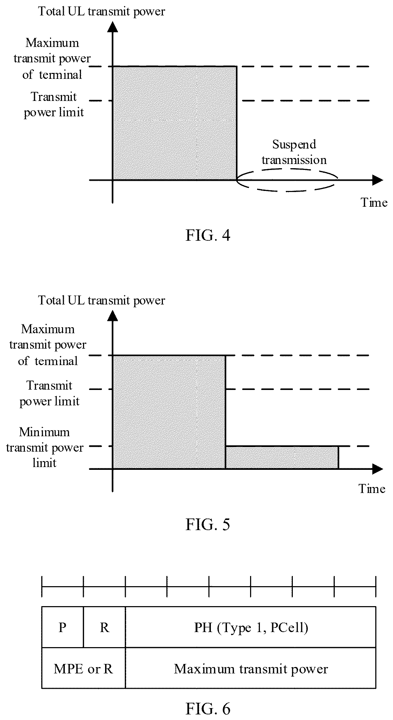

In some cases, as shown in FIG. 4, the terminal may use the maximum transmit power to send uplink data in some time slots. In order to ensure that the average transmit power on the transmission symbol corresponding to the actual UL duty cycle ratio during the uplink evaluation period meets the requirements of the transmit power limit, the terminal may be unable to send uplink data subsequently. Even if the terminal needs to send data during this period, the terminal cannot continue to send data. In other cases, as shown in FIG. 5, after the terminal uses the maximum transmit power to send uplink data in certain time slots, in order to ensure that the average transmit power on the transmission symbol corresponding to the actual UL duty cycle ratio during the uplink evaluation period meets the requirements of the transmit power limit in the subsequent time, the terminal can only send uplink data using the minimum transmit power. The minimum transmit power may also be referred to as a minimum transmit power limit, which indicates the minimum transmit power at which the terminal sends uplink data. If the transmit power is lower than the minimum transmit power limit, the terminal cannot send uplink data.

According to some specifications, the terminal may use a maximum uplink duty cycle (maxUplinkDutyCycle) to avoid non-CA SAR/MPE issues of a high power user equipment (HPUE). For the CA case, this problem may be avoided by the UE implementation.

According to the radio access network (RAN) 4 specification, for example, for a PC2 (26 dBm) terminal, the actual transmit power in a band and the probability of a transmit power higher than the default transmit power (23 dBm) depend on the terminal implementation, ensuring that the SAR/MPE requirements are met within the uplink evaluation period without exceeding the maximum UL duty cycle ratio. When the maximum UL duty cycle ratio is not exceeded within the uplink evaluation period, the maximum 26 dBm may be used for transmissions. However, if the transmission is performed under the condition of exceeding the maximum UL duty cycle ratio within the uplink evaluation period, the transmit power class of the terminal needs to fall back to PC3, i.e., 23 dBm, during the subsequent transmission time. According to the RAN4 specification in R17, the maximum transmit power of inter-band CA and inter-band evolution-universal terrestrial radio access network new radio dual connectivity (EN-DC) may be the sum of the maximum output power values of the aggregated bands, which also depends on similar conditions to the probability of being higher than the default transmit power (23 dBm) in the band, that is, depends on the terminal implementation to ensure that the SAR/MPE requirements are met within the uplink evaluation period without exceeding the maximum UL duty cycle ratio.

Considering that the transmit power of the terminal may be changed based on the terminal implementation, these operations are transparent to the network device. Therefore, the terminal may report to the network device the instantaneous transmit power for performing a physical uplink shared channel (PUSCH) transmission. For example, the power headroom report (PHR) is used to report to the network device. The PHR may include power headroom (PH), maximum transmit power *P*_{CMAX,f,c}, and power-maximum power reduction (P-MPR). The power headroom reflects the amount of additional transmit power at which the terminal can perform a transmission with reference to the current PUSCH power level, and *P*_{CMAX,f,c} reflects the maximum power at which the terminal can perform a transmission in this case.

However, it is specified in the current protocol that P-MPR is only used for the FR2 band, that is, only the PHR sent by the terminal in the FR2 band includes the MPR information determined based on the MPE requirements, while the PHR sent by the terminal in the FR1 band does not include the MPR information determined based on the SAR requirements.

Currently, the PHR reported by the terminal includes a single-carrier-based PHR and a multi-carrier-based PHR.

FIG. 6 shows a PHR configuration format under a single carrier, which mainly includes a P indication field, an R indication field, an MPE indication field, a PH indication field, and a *P*_{CMAX,f,c} indication field.

The P indication field is used to indicate whether MPR information based on MPE requirements is reported.

The R indication field is a reserved indication field, which is mainly used to record corresponding newly added data when necessary.

The MPE indication field is used to indicate the MPR value based on the MPE requirements when the P indication field indicates that MPR information based on the MPE requirements is reported.

The PH indication field is used to indicate the transmit power headroom at which the terminal can perform a transmission when accessing a primary cell under type 1 (PUSCH).

The *P*_{CMAX,f,c} indication field is used to indicate the maximum transmit power at which the terminal can perform a transmission.

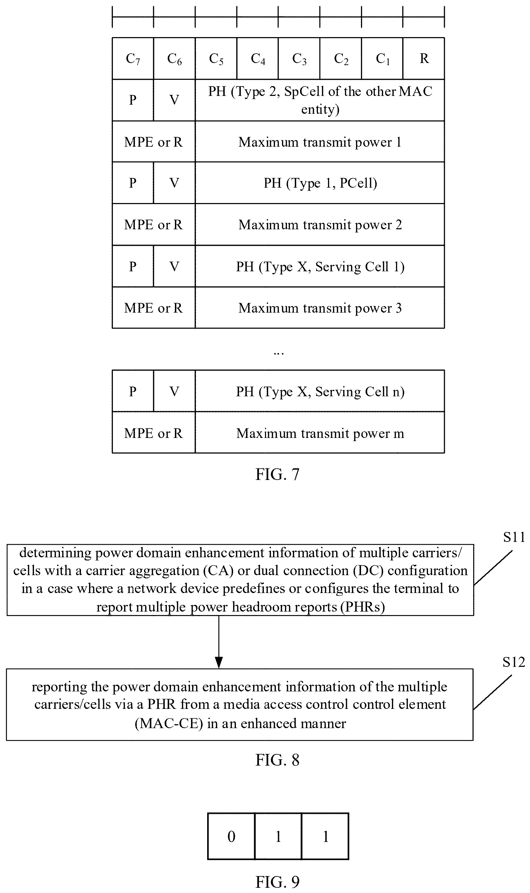

FIG. 7 shows a PHR configuration format in a multi-carrier case. C₁ to C₇ may be used to indicate different carriers. It may be understood that the multi-carrier PHR may be regarded as a combination of multiple single-carrier PHRs. Type 2 may correspond to a physical uplink control channel (PUCCH), and a special cell (SpCell) may include a PCell and a primary secondary cell (PSCell). The serving cell may be a PCell, a secondary cell (SCell), a PSCell, or a SpCell.

Although the terminal can make the network device aware of some power statuses of the terminal by reporting the PHR, the network device still does not know the reason why the transmit power of the terminal changes due to the SAR/MPE requirements.

In the related art, due to the time-varying nature of RF exposure, a new mechanism is introduced for the terminal to report the transmit power availability to the network device. In some schemes, the terminal may periodically report the available energy to the network device, which may be achieved by sending an energy headroom report (EHR) or an energy availability report (EAR) to the network device along with the PHR or independently. For different component carriers (CCs), the terminal will perform uplink transmissions corresponding to different transmit power limits. In the UL duty cycle time window, the accumulative power reported by the PHR determines the capacity of the remaining time of the window. The reporting can support the network device to learn about the impact of SAR/MPE requirements on subsequent transmissions of the terminal in a newly defined manner.

In the research requirements of R18, uplink coverage has always been one of the bottlenecks of the system performance, which will affect the signal quality and user experience. Users, including operators, have a strong demand for enhanced uplink coverage. In the coverage enhancement (CE) research of R18, the enhancement of a power domain is an issue worth exploring, which has the most direct improving effect on the coverage and spectral efficiency (SE).

In NR uplink CA/DC, the maximum transmit power defined in the BC is limited by the transmit power class of the terminal defined in the BC. The RAN4 enhancement in R17 supports the HPUE to better utilize the independent PA of the terminal to achieve higher transmit power, mainly enhancing the PC2+PC3 configuration.

When the terminal actually performs an uplink transmission, FR1 is limited by SAR requirements, and FR2 is limited by MPE requirements, so the actual transmit power will be limited. The transmit power adjustment based on SAR/MPE requirements may also cause large fluctuations or interruptions in the transmit power. Based on the RAN4 protocol, the terminal defines this type of implementation to be transparent to the network device. These power limitations, adjustments, and whether the HPUE can achieve a high-power transmission have a significant impact on the scheduling performed by a network device, and will directly affect the actual effect of R17 enhancements deployed in the network device.

Therefore, allowing the network device to learn about power-related information of the terminal and understand the corresponding behavior of the terminal can support better scheduling decisions of the network device. Thus, how to realize the reporting of power information and the corresponding mechanism and signaling are problems that need to be solved.

Based on this, an embodiment of the present disclosure proposes a method for reporting power information. A terminal determines power domain enhancement information of multiple carriers/cells with a CA or DC configuration in the case where a network device predefines or configures the terminal to report multiple power headroom reports (PHRs), and reports the power domain enhancement information of the multiple carriers/cells via a PHR from an MAC-CE in an enhanced manner. Therefore, the network device can determine the power domain enhancement information of the multiple carriers/cells based on the PHR from the MAC-CE, so as to understand the behavior of the terminal, enable the network device to make better scheduling decisions, perform a scheduling that is more suitable for task transmission needs, improve the system throughput and user coverage, improve the system efficiency, and reduce ineffective scheduling. Furthermore, since the network device can obtain the power domain enhancement information of the multiple carriers/cells, it can schedule the terminal to achieve a higher power transmission based on the power domain enhancement information, thereby saving power for the terminal.

FIG. 8 is a flow chart illustrating a method for reporting power information according to an illustrative embodiment. As shown in FIG. 8, the method for reporting power information is performed by a terminal and includes the following steps.

At step S11, power domain enhancement information of multiple carriers/cells with a CA or DC configuration is determined in a case where a network device predefines or configures the terminal to report multiple PHRs.

The number of the multiple PHRs is the same as the number of the multiple carriers/cells.

For example, when the network device predefines or configures the terminal to report *M* PHRs, the terminal needs to determine power domain enhancement information of *M* carriers/cells with the CA or DC configuration.

In an implementation, whether the terminal reports multiple PHRs is determined by determining whether the parameter multiplePHR is enabled. For example, when the network device predefines or configures the value of the multiplePHR to be true, the terminal reports multiple PHRs.

In some embodiments, the power domain enhancement information of multiple carriers/cells is used to indicate power information of the multiple carriers/cells in FR1 and FR2.

The power information includes at least power headroom, maximum power reduction (MPR) information and maximum transmit power.

At step S12, the power domain enhancement information of the multiple carriers/cells is reported via a PHR from an MAC-CE in an enhanced manner.

In the embodiments of the present disclosure, the terminal determines power domain enhancement information of multiple carriers/cells with a CA or DC configuration in the case where the network device predefines or configures the terminal to report multiple power headroom reports (PHRs), and reports the power domain enhancement information of the multiple carriers/cells via a PHR from an MAC-CE in an enhanced manner. Therefore, the network device can determine the power domain enhancement information of the multiple carriers/cells based on the PHR from the MAC-CE, so as to understand the behavior of the terminal, enable the network device to make better scheduling decisions, perform a scheduling that is more suitable for task transmission needs, improve the system throughput and user coverage, improve the system efficiency, and reduce ineffective scheduling. Furthermore, since the network device can obtain the power domain enhancement information of the multiple carriers/cells, it can schedule the terminal to achieve a higher power transmission based on the power domain enhancement information, thereby saving power for the terminal.

In the method for reporting power information provided in the embodiments of the present disclosure, the power domain enhancement information at least includes maximum power reduction (MPR) information of the multiple carriers/cells, and the MPR information is determined based on specific absorption rate (SAR) requirements or maximum permissible exposure (MPE) requirements.

When the power domain enhancement information includes the MPR information determined based on the SAR requirements, it indicates that there is a carrier/cell operating in FR1 among the multiple carriers/cells. When the power domain enhancement information includes MPR information determined based on the MPE requirements, it indicates that there is a carrier/cell operating in FR2 among the multiple carriers/cells.

In the embodiments of the present disclosure, by enhancing the MPR, the terminal can report the MPR information determined based on the SAR requirements or the MPR information determined based on the MPE requirements, so that the network device can determine the power information corresponding to the carrier/cell operating in FR1 or FR2, so as to accurately obtain the power information of the terminal and perform better scheduling.

In the method for reporting power information provided in the embodiments of the present disclosure, the power domain enhancement information includes one of following corresponding combinations of the MPR information of the multiple carriers/cells: the MPR information determined based on the SAR requirements and the MPR information determined based on the SAR requirements; the MPR information determined based on the SAR requirements and the MPR information determined based on the MPE requirements; or the MPR information determined based on the MPE requirements and the MPR information determined based on the MPE requirements.

If the corresponding combination of MPR information of the multiple carriers/cells is the MPR information determined based on the SAR requirements and the MPR information determined based on the SAR requirements, it indicates that the frequency range in which the multiple carriers/cells operate is a combination of FR1+FR1. If the corresponding combination of MPR information of the multiple carriers/cells is the MPR information determined based on the SAR requirements and the MPR information determined based on the MPE requirements, it indicates that the frequency range in which the multiple carriers/cells operate is a combination of FR1+FR2. If the corresponding combination of MPR information of the multiple carriers/cells is the MPR information determined based on the MPE requirements and the MPR information determined based on the MPE requirements, it indicates that the frequency range in which the multiple carriers/cells operate is a combination of FR2+FR2.

In the embodiments of the present disclosure, the terminal can report the MPR information of the multiple carriers/cells determined based on the SAR or MPE requirements in both FR1 and FR2, so that the network device can perform better scheduling for the terminal in different frequency ranges, improve the system throughput and user coverage, and reduce ineffective scheduling.

In the method for reporting power information provided in the embodiments of the present disclosure, the power domain enhancement information of the multiple carriers/cells is carried in multiple PHRs, and each PHR in the multiple PHRs corresponds to one carrier/cell in the multiple carriers/cells. The power domain enhancement information carried in each PHR in the multiple PHRs includes: a power headroom (PH) value or a PH mapping value; MPR information; and maximum transmit power information corresponding to a power class (PC) of the terminal, the maximum transmit power information including a maximum transmit power value, a maximum transmit power mapping value, or a maximum transmit power change adjustment amount.

In the method for reporting power information provided in the embodiments of the present disclosure, the multiple PHRs are carried in a single MAC-CE signaling. The PHR format is shown in FIG. 7.

In the method for reporting power information provided in the embodiments of the present disclosure, the multiple PHRs are carried in multiple MAC-CE signalings, and each MAC-CE corresponds to one PHR.

For example, each MAC-CE carries one PHR in the PHR format shown in FIG. 6, and each PHR corresponds to one carrier/cell.

In the method for reporting power information provided in the embodiments of the present disclosure, the PH value or the PH mapping value is calculated based on a physical uplink shared channel (PUSCH) on which a corresponding carrier or cell actually performs a transmission, or based on a PUSCH reference configuration of a corresponding carrier or cell.

In the method for reporting power information provided in the embodiments of the present disclosure, the MPR information is carried in a first indication field of the PHR, and a second indication field of the PHR indicates whether a SAR-based MPR reporting occurs, in response to the MPR information being determined based on the SAR requirements.

In the method for reporting power information provided in the embodiments of the present disclosure, the first indication field is an MPE indication field or a newly added indication field of the PHR.

In an implementation, when a carrier/cell operates in FR2, the original MPE indication field of the PHR indicates the MPR information determined based on the MPE requirements; and when a carrier/cell operates in FR1, the original MPE indication field of the PHR indicates the MPR information determined based on the SAR requirements.

In another implementation, when a carrier/cell operates in FR2, the original MPE indication field of the PHR indicates the MPR information determined based on the MPE requirements; and when a carrier/cell operates in FR1, a new indication field is added to the PHR to indicate the MPR information determined based on the SAR requirements.

In the method for reporting power information provided in the embodiments of the present disclosure, the second indication field is a P indication field, a reserved (R) indication field or a newly added indication field of the PHR.

In an implementation, when a carrier/cell operates in FR2, the original P indication field of the PHR indicates whether MPR information determined based on the MPE requirements is reported; and when a carrier/cell operates in FR1, the original P indication field of the PHR indicates whether MPR information determined based on the SAR requirements is reported.

In another implementation, when a carrier/cell operates in FR2, the original P indication field of the PHR indicates whether MPR information determined based on the MPE requirements is reported; and when a carrier/cell operates in FR1, the original R indication field of the PHR indicates whether MPR information determined based on the SAR requirements is reported.

In another implementation, when a carrier/cell operates in FR2, the original P indication field of the PHR indicates whether MPR information determined based on the MPE requirements is reported; and when a carrier/cell operates in FR1, a new indication field is added to the PHR to indicate whether MPR information determined based on the SAR requirements is reported.

In the embodiments of the present disclosure, by redefining the indication field of the PHR or adding a new indication field to the PHR to indicate whether MPR information determined based on the SAR requirements is reported, and indicating the MPR information determined based on the SAR requirements when it is indicated that the MPR information determined based on the SAR requirements is reported, the network device can determine the power information corresponding to the carrier/cell operating in FR1, so as to accurately obtain the power information of the terminal and perform better scheduling.

In the method for reporting power information provided in the embodiments of the present disclosure, in response to the power domain enhancement information including the maximum transmit power information corresponding to the power class of the terminal, the terminal can report the maximum transmit power information corresponding to each carrier/cell with the CA or DC configuration.

In the method for reporting power information provided in the embodiments of the present disclosure, in response to the power domain enhancement information including the maximum transmit power information corresponding to the power class of the terminal, the terminal can report the maximum transmit power information corresponding to each carrier/cell with the CA or DC configuration, and the terminal can report information of a carrier or cell whose transmit power class changes.

In an implementation, the terminal reports the maximum transmit power information corresponding to each carrier/cell with the CA or DC configuration based on the PHR, and reports the information of the carrier or cell whose transmit power class changes based on the PHR.

For example, the terminal reports maximum transmit power information of *a* carriers/cells, and there are *b* carriers/cells whose transmit power classes have changed among the *a* carriers/cells. Then, the PHR corresponding to the *b* carriers/cells indicates that the transmit power classes of the *b* carriers/cells have changed.

In the method for reporting power information provided in the embodiments of the present disclosure, information of a carrier/cell whose transmit power class has changed is carried in a redefined indication field, a reserved indication field, or a newly added indication field of the PHR.

In the method for reporting power information provided in the embodiments of the present disclosure, the newly added indication field indicates a PC change status of each carrier/cell with a code point or a bitmap.

In an implementation, the newly added indication field uses a code point to indicate the PC change status of each carrier/cell.

For example, taking the number of carriers/cells being 2 as an example, the PC change status of the two carriers/cells is indicated by 2 bits as shown in Table 2.

**Table 2**

| Code point | Carrier 1/Cell 1 | Carrier 2/Cell 2 |
|---|---|---|
| 00 | No change | No change |
| 01 | Change | No change |
| 10 | No change | Change |
| 11 | Change | Change |

In another implementation, the newly added indication field uses a bitmap to indicate the PC change status of each carrier/cell.

For example, taking the number of carriers/cells being 3 as an example, the first carrier/cell corresponds to the first bit in the bitmap, the second carrier/cell corresponds to the second bit in the bitmap, and the third carrier/cell corresponds to the first bit in the bitmap. As shown in FIG. 9, the value of the first bit is 0, indicating that the PC of the first carrier/cell has not changed; the value of the second bit is 1, indicating that the PC of the second carrier/cell has changed; the value of the third bit is 1, indicating that the PC of the third carrier/cell has changed.

In the embodiments of the present disclosure, when the terminal reports the maximum transmit power information of multiple carriers/cells, the carrier/cell whose PC changes is indicated by redefining the indication field of the PHR or using the reserved indication field of the PHR or adding a new indication field to the PHR, so that the network device can accurately and comprehensively obtain power information of different carriers/cells, and then perform better scheduling based on the power information of the different carriers/cells.

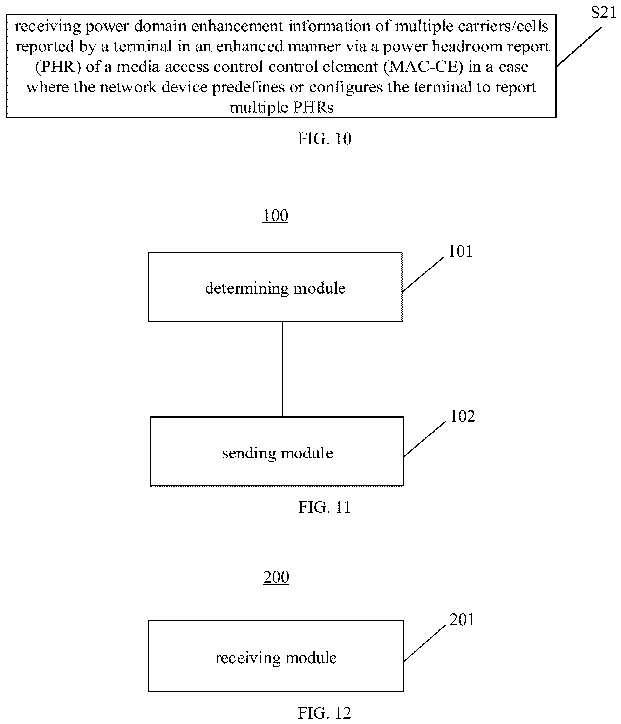

FIG. 10 is a flow chart illustrating a method for reporting power information according to an illustrative embodiment. As shown in FIG. 10, the method for reporting power information is performed by a network device and includes the following step.

At step S21, power domain enhancement information of multiple carriers/cells reported by a terminal in an enhanced manner is received via a power headroom report (PHR) of an MAC-CE in a case where the network device predefines or configures the terminal to report multiple PHRs.

The number of the multiple PHRs is the same as the number of the multiple carriers/cells.

For example, when the network device predefines or configures the terminal to report *M* PHRs, the terminal needs to determine power domain enhancement information of *M* carriers/cells with the CA or DC configuration.

In an implementation, whether the terminal reports multiple PHRs is determined by determining whether the parameter multiplePHR is enabled. For example, when the network device predefines or configures the value of the multiplePHR to be true, the terminal reports multiple PHRs.

In some embodiments, the power domain enhancement information of multiple carriers/cells is used to indicate power information of the multiple carriers/cells in FR1 and FR2.

The power information includes at least power headroom, maximum power reduction (MPR) information and maximum transmit power.

In the embodiments of the present disclosure, the terminal determines power domain enhancement information of multiple carriers/cells with a CA or DC configuration in the case where the network device predefines or configures the terminal to report multiple power headroom reports (PHRs), and reports the power domain enhancement information of the multiple carriers/cells via a PHR from an MAC-CE in an enhanced manner. Therefore, the network device can determine the power domain enhancement information of the multiple carriers/cells based on the PHR from the MAC-CE, so as to understand the behavior of the terminal, enable the network device to make better scheduling decisions, perform a scheduling that is more suitable for task transmission needs, improve the system throughput and user coverage, improve the system efficiency, and reduce ineffective scheduling. Furthermore, since the network device can obtain the power domain enhancement information of the multiple carriers/cells, it can schedule the terminal to achieve a higher power transmission based on the power domain enhancement information, thereby saving power for the terminal.

In the method for reporting power information provided in the embodiments of the present disclosure, the power domain enhancement information at least includes maximum power reduction (MPR) information of the multiple carriers/cells, and the MPR information is determined based on specific absorption rate (SAR) requirements or maximum permissible exposure (MPE) requirements.

When the power domain enhancement information includes the MPR information determined based on the SAR requirements, it indicates that there is a carrier/cell operating in FR1 among the multiple carriers/cells. When the power domain enhancement information includes MPR information determined based on the MPE requirements, it indicates that there is a carrier/cell operating in FR2 among the multiple carriers/cells.

In the embodiments of the present disclosure, by enhancing the MPR, the terminal can report the MPR information determined based on the SAR requirements or the MPR information determined based on the MPE requirements, so that the network device can determine the power information corresponding to the carrier/cell operating in FR1 or FR2, so as to accurately obtain the power information of the terminal and perform better scheduling.

In the method for reporting power information provided in the embodiments of the present disclosure, the power domain enhancement information includes one of following corresponding combinations of the MPR information of the multiple carriers/cells: the MPR information determined based on the SAR requirements and the MPR information determined based on the SAR requirements; the MPR information determined based on the SAR requirements and the MPR information determined based on the MPE requirements; or the MPR information determined based on the MPE requirements and the MPR information determined based on the MPE requirements.

If the corresponding combination of MPR information of the multiple carriers/cells is the MPR information determined based on the SAR requirements and the MPR information determined based on the SAR requirements, it indicates that the frequency range in which the multiple carriers/cells operate is a combination of FR1+FR1. If the corresponding combination of MPR information of the multiple carriers/cells is the MPR information determined based on the SAR requirements and the MPR information determined based on the MPE requirements, it indicates that the frequency range in which the multiple carriers/cells operate is a combination of FR1+FR2. If the corresponding combination of MPR information of the multiple carriers/cells is the MPR information determined based on the MPE requirements and the MPR information determined based on the MPE requirements, it indicates that the frequency range in which the multiple carriers/cells operate is a combination of FR2+FR2.

In the embodiments of the present disclosure, the terminal can report the MPR information of the multiple carriers/cells determined based on the SAR or MPE requirements in both FR1 and FR2, so that the network device can perform better scheduling for the terminal in different frequency ranges, improve the system throughput and user coverage, and reduce ineffective scheduling.

In the method for reporting power information provided in the embodiments of the present disclosure, the power domain enhancement information of the multiple carriers/cells is carried in multiple PHRs, and each PHR in the multiple PHRs corresponds to one carrier/cell in the multiple carriers/cells. The power domain enhancement information carried in each PHR in the multiple PHRs includes: a power headroom (PH) value or a PH mapping value; MPR information; and maximum transmit power information corresponding to a power class (PC) of the terminal, the maximum transmit power information including a maximum transmit power value, a maximum transmit power mapping value, or a maximum transmit power change adjustment amount.

In the method for reporting power information provided in the embodiments of the present disclosure, the multiple PHRs are carried in a single MAC-CE signaling. The PHR format is shown in FIG. 7.

In the method for reporting power information provided in the embodiments of the present disclosure, the multiple PHRs are carried in multiple MAC-CE signalings, and each MAC-CE corresponds to one PHR.

For example, each MAC-CE carries one PHR in the PHR format shown in FIG. 6, and each PHR corresponds to one carrier/cell.

In the method for reporting power information provided in the embodiments of the present disclosure, the PH value or the PH mapping value is calculated based on a physical uplink shared channel (PUSCH) on which a corresponding carrier or cell actually performs a transmission, or based on a PUSCH reference configuration of a corresponding carrier or cell.

In the method for reporting power information provided in the embodiments of the present disclosure, the MPR information is carried in a first indication field of the PHR, and a second indication field of the PHR indicates whether a SAR-based MPR reporting occurs, in response to the MPR information being determined based on the SAR requirements.

In the method for reporting power information provided in the embodiments of the present disclosure, the first indication field is an MPE indication field or a newly added indication field of the PHR.

In an implementation, when a carrier/cell operates in FR2, the original MPE indication field of the PHR indicates the MPR information determined based on the MPE requirements; and when a carrier/cell operates in FR1, the original MPE indication field of the PHR indicates the MPR information determined based on the SAR requirements.

In another implementation, when a carrier/cell operates in FR2, the original MPE indication field of the PHR indicates the MPR information determined based on the MPE requirements; and when a carrier/cell operates in FR1, a new indication field is added to the PHR to indicate the MPR information determined based on the SAR requirements.

In the method for reporting power information provided in the embodiments of the present disclosure, the second indication field is a P indication field, a reserved (R) indication field or a newly added indication field of the PHR.

In an implementation, when a carrier/cell operates in FR2, the original P indication field of the PHR indicates whether MPR information determined based on the MPE requirements is reported; and when a carrier/cell operates in FR1, the original P indication field of the PHR indicates whether MPR information determined based on the SAR requirements is reported.

In another implementation, when a carrier/cell operates in FR2, the original P indication field of the PHR indicates whether MPR information determined based on the MPE requirements is reported; and when a carrier/cell operates in FR1, the original R indication field of the PHR indicates whether MPR information determined based on the SAR requirements is reported.

In another implementation, when a carrier/cell operates in FR2, the original P indication field of the PHR indicates whether MPR information determined based on the MPE requirements is reported; and when a carrier/cell operates in FR1, a new indication field is added to the PHR to indicate whether MPR information determined based on the SAR requirements is reported.

In the embodiments of the present disclosure, by redefining the indication field of the PHR or adding a new indication field to the PHR to indicate whether MPR information determined based on the SAR requirements is reported, and indicating the MPR information determined based on the SAR requirements when it is indicated that the MPR information determined based on the SAR requirements is reported, the network device can determine the power information corresponding to the carrier/cell operating in FR1, so as to accurately obtain the power information of the terminal and perform better scheduling.

In the method for reporting power information provided in the embodiments of the present disclosure, in response to the power domain enhancement information including the maximum transmit power information corresponding to the power class of the terminal, the network device can receive the maximum transmit power information corresponding to each carrier/cell with the CA or DC configuration reported by the terminal.

In the method for reporting power information provided in the embodiments of the present disclosure, in response to the power domain enhancement information including the maximum transmit power information corresponding to the power class of the terminal, the network device can receive the maximum transmit power information corresponding to each carrier/cell with the CA or DC configuration reported by the terminal, and the network device can receive information of a carrier or cell whose transmit power class changes reported by the terminal.

In an implementation, the network device can receive the maximum transmit power information corresponding to each carrier/cell with the CA or DC configuration reported by the terminal based on the PHR, and receive the information of the carrier or cell whose transmit power class changes reported by the terminal based on the PHR.

For example, the terminal reports maximum transmit power information of *a* carriers/cells, and there are *b* carriers/cells whose transmit power classes have changed among the *a* carriers/cells. Then, the PHR corresponding to the *b* carriers/cells indicates that the transmit power classes of the *b* carriers/cells have changed.

In the method for reporting power information provided in the embodiments of the present disclosure, information of a carrier/cell whose transmit power class has changed is carried in a redefined indication field, a reserved indication field, or a newly added indication field of the PHR.

In the method for reporting power information provided in the embodiments of the present disclosure, the newly added indication field indicates a PC change status of each carrier/cell with a code point or a bitmap.

In an implementation, the newly added indication field uses a code point to indicate the PC change status of each carrier/cell.

For example, taking the number of carriers/cells being 2 as an example, the PC change status of the two carriers/cells is indicated by 2 bits. For example, when the value of the 2 bits is 00, the PCs of the two carriers/cells do not change.

In another implementation, the newly added indication field uses a bitmap to indicate the PC change status of each carrier/cell.

For example, taking the number of carriers/cells being 3 as an example, the first carrier/cell corresponds to the first bit in the bitmap, the second carrier/cell corresponds to the second bit in the bitmap, and the third carrier/cell corresponds to the first bit in the bitmap. The value of the first bit is 0, indicating that the PC of the first carrier/cell has not changed; the value of the second bit is 1, indicating that the PC of the second carrier/cell has changed; the value of the third bit is 1, indicating that the PC of the third carrier/cell has changed.

In the embodiments of the present disclosure, when the terminal reports the maximum transmit power information of multiple carriers/cells, the carrier/cell whose PC changes is indicated by redefining the indication field of the PHR or using the reserved indication field of the PHR or adding a new indication field to the PHR, so that the network device can accurately and comprehensively obtain power information of different carriers/cells, and then perform better scheduling based on the power information of the different carriers/cells.

It should be noted that those skilled in the art will appreciate that the various implementations/examples in above embodiments of the present disclosure may be used in conjunction with the foregoing embodiments or may be used independently. The principles of the various implementations/examples are similar, whether used alone or in conjunction with the foregoing embodiments. In an implementation of the present disclosure, some embodiments are described as embodiments that are used together. Certainly, it will be understood by those skilled in the art that such illustrations are not intended to limit the embodiments of the present disclosure.

Based on the same concept, embodiments of the present disclosure also provide an apparatus for reporting power information.

It may be understood that the apparatus for reporting power information provided in the embodiments of the present disclosure includes corresponding hardware structures and/or software modules for performing various functions in order to implement the above-mentioned functions. Embodiments of the present disclosure may be implemented in a form of hardware or a combination of hardware and computer software in combination with units and algorithm steps of each example disclosed in the embodiments of the present disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present disclosure.

FIG. 11 is a block diagram illustrating an apparatus for reporting power information according to an illustrative embodiment. As shown in FIG. 11, the apparatus 100 includes a determining module 101 and a sending module 102.

The determining module 101 is configured to determine power domain enhancement information of multiple carriers/cells with a carrier aggregation (CA) or dual connection (DC) configuration in a case where a network device predefines or configures a terminal to report multiple power headroom reports (PHRs). The sending module 102 is configured to report the power domain enhancement information of the multiple carriers/cells via a PHR from an MAC-CE in an enhanced manner.

In an implementation, the power domain enhancement information at least includes maximum power reduction (MPR) information of the multiple carriers/cells, and the MPR information is determined based on specific absorption rate (SAR) requirements or maximum permissible exposure (MPE) requirements.

In an implementation, the power domain enhancement information includes one of following combinations of the MPR information of the multiple carriers/cells: the MPR information determined based on the SAR requirements and the MPR information determined based on the SAR requirements; the MPR information determined based on the SAR requirements and the MPR information determined based on the MPE requirements; or the MPR information determined based on the MPE requirements and the MPR information determined based on the MPE requirements.

In an implementation, the power domain enhancement information of the multiple carriers/cells is carried in multiple PHRs, and each PHR in the multiple PHRs corresponds to one carrier/cell in the multiple carriers/cells; and the power domain enhancement information carried in each PHR in the multiple PHRs includes: a power headroom (PH) value or a PH mapping value, MPR information, and maximum transmit power information corresponding to a power class (PC) of the terminal, the maximum transmit power information including a maximum transmit power value, a maximum transmit power mapping value, or a maximum transmit power change adjustment amount.

In an implementation, the multiple PHRs are carried in a single MAC-CE signaling.

In an implementation, the multiple PHRs are carried in multiple MAC-CE signalings, and each MAC-CE signaling corresponds to one PHR.

In an implementation, the PH value or the PH mapping value is calculated based on a physical uplink shared channel (PUSCH) on which a corresponding carrier or cell actually performs a transmission, or based on a PUSCH reference configuration of a corresponding carrier or cell.

In an implementation, the MPR information is carried in a first indication field of the PHR, and a second indication field of the PHR indicates whether a SAR-based MPR reporting occurs, in response to the MPR information being determined based on the SAR requirements.

In an implementation, the first indication field is an MPE indication field or a newly added indication field of the PHR.

In an implementation, the second indication field is a P indication field, a reserved indication field or a newly added indication field of the PHR.

In an implementation, the maximum transmit power information corresponding to the power class of the terminal includes: maximum transmit power information of each corresponding carrier/cell with the CA or DC configuration.

In an implementation, the sending module 102 is configured to report information of a carrier or cell whose transmit power class changes.

In an implementation, the information of the carrier/cell whose transmit power class changes is reported based on the PHR.

In an implementation, the information of the carrier/cell whose transmit power class changes is carried in a redefined indication field, a reserved indication field, or a newly added indication field of the PHR.

In an implementation, the newly added indication field indicates a PC change status of each carrier/cell with a code point or a bitmap.

With respect to the apparatus in the above embodiments, the specific manners for performing operations for individual modules therein have been described in detail in the embodiments regarding the method, which will not be elaborated herein.

FIG. 12 is a block diagram illustrating an apparatus for reporting power information according to an illustrative embodiment. As shown in FIG. 12, the apparatus 200 includes a receiving module 201.

The receiving module 201 is configured to receive power domain enhancement information of multiple carriers/cells reported by a terminal in an enhanced manner via a power headroom report (PHR) from an MAC-CE in a case where the network device predefines or configures the terminal to report multiple PHRs.

In an implementation, the power domain enhancement information at least includes maximum power reduction (MPR) information of the multiple carriers/cells, and the MPR information is determined based on specific absorption rate (SAR) requirements or maximum permissible exposure (MPE) requirements.

In an implementation, the power domain enhancement information includes one of following combinations of the MPR information of the multiple carriers/cells: the MPR information determined based on the SAR requirements and the MPR information determined based on the SAR requirements; the MPR information determined based on the SAR requirements and the MPR information determined based on the MPE requirements; or the MPR information determined based on the MPE requirements and the MPR information determined based on the MPE requirements.

In an implementation, the power domain enhancement information of the multiple carriers/cells is carried in multiple PHRs, and each PHR in the multiple PHRs corresponds to one carrier/cell in the multiple carriers/cells; and the power domain enhancement information carried in each PHR in the multiple PHRs includes: a power headroom (PH) value or a PH mapping value, MPR information, and maximum transmit power information corresponding to a power class (PC) of the terminal, the maximum transmit power information including a maximum transmit power value, a maximum transmit power mapping value, or a maximum transmit power change adjustment amount.

In an implementation, the multiple PHRs are carried in a single MAC-CE signaling.

In an implementation, the multiple PHRs are carried in multiple MAC-CE signalings, and each MAC-CE signaling corresponds to one PHR.

In an implementation, the PH value or the PH mapping value is calculated based on a physical uplink shared channel (PUSCH) on which a corresponding carrier or cell actually performs a transmission, or based on a PUSCH reference configuration of a corresponding carrier or cell.

In an implementation, the MPR information is carried in a first indication field of the PHR, and a second indication field of the PHR indicates whether a SAR-based MPR reporting occurs, in response to the MPR information being determined based on the SAR requirements.

In an implementation, the first indication field is an MPE indication field or a newly added indication field of the PHR.

In an implementation, the second indication field is a P indication field, a reserved indication field or a newly added indication field of the PHR.

In an implementation, the maximum transmit power information corresponding to the power class of the terminal includes: maximum transmit power information of each corresponding carrier/cell with the CA or DC configuration.

In an implementation, the receiving module is configured to receive information of a carrier or cell whose transmit power class changes that is sent by the terminal.

In an implementation, the information of the carrier/cell whose transmit power class changes is reported based on the PHR.

In an implementation, the information of the carrier/cell whose transmit power class changes is carried in a redefined indication field, a reserved indication field, or a newly added indication field of the PHR.

In an implementation, the newly added indication field indicates a PC change status of each carrier/cell with a code point or a bitmap.

It should be noted that the respective modules/units involved in the apparatus 100 for reporting power information and the apparatus 200 for reporting power information according to the embodiments of the present disclosure are merely illustrative and are not to be construed as limiting the present disclosure. For example, the apparatus 100 for reporting power information in the embodiments of the present disclosure may further include a receiving unit and/or a processing unit. The apparatus 200 for reporting power information may further include a sending unit and/or a processing unit. The units included in the apparatus 100 for reporting power information and the apparatus 200 for reporting power information may interact with each other, and may also interact with other network element devices.

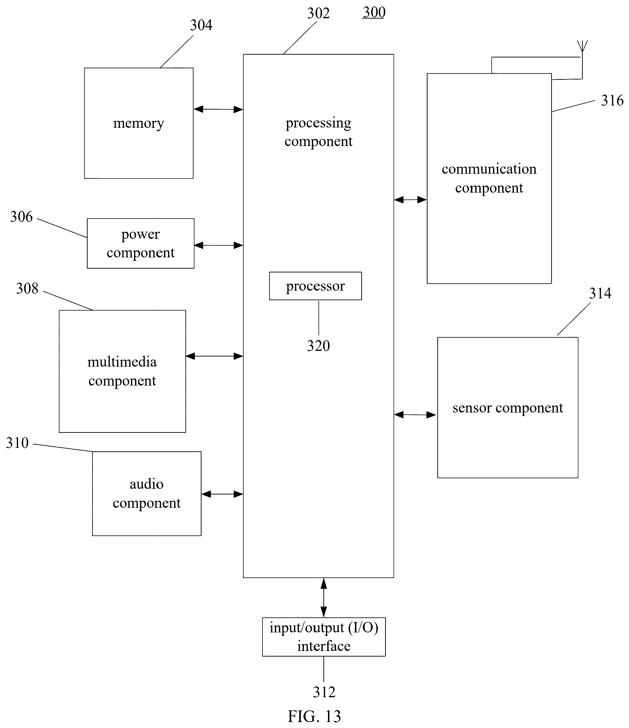

FIG. 13 is a block diagram illustrating a device for reporting power information according to an illustrative embodiment. For example, the device 300 may be a mobile phone, a computer, a digital broadcast terminal, a messaging device, a game console, a tablet device, a medical device, a fitness device, a personal digital assistant, or the like.

Referring to FIG. 13, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 may include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 may access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 304, executable by the processor 320 in the device 300, for completing the above-mentioned methods. For example, the non-transitory computer-readable storage medium may be a ROM, a random access memory (RAM), a CD-ROM, a magnetic tape, a floppy disc, an optical data storage device, and the like.

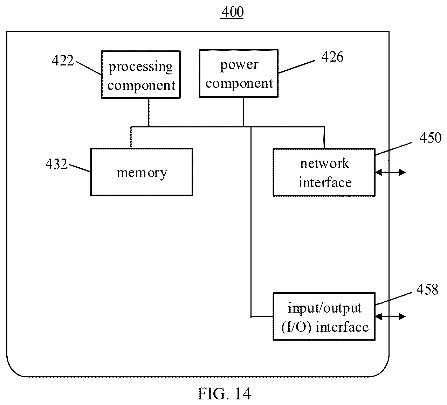

FIG. 14 is a block diagram illustrating a device for reporting power information according to an illustrative embodiment. For example, the device 400 may be provided as a network device. Referring to FIG. 14, the device 400 includes a processing component 422 and a memory resource represented by a memory 432. The processing component 422 may further include one or more processors. The memory 432 is configured to store instructions executable by the processing component 422, such as an application program. The application program stored in the memory 432 may include one or more modules each corresponding to a set of instructions. In addition, the processing component 422 is configured to execute the instructions to perform the above-mentioned methods.

The device 400 further includes a power component 426 configured to perform a power management on the device 400, a wired or wireless network interface 450 configured to connect the device 400 to the network, and an input/output (I/O) interface 458. The device 400 may operate an operating system stored in the memory 432, such as Windows Server^{™}, Mac OS X^{™}, Unix^{™}, Linux^{™}, Free BSD^{™}, or the like.

In an illustrative embodiment, there is also provided a non-transitory computer readable storage medium including instructions, such as included in the memory 432, executable by the processing component 422 in the device 400, for completing the above-mentioned methods. For example, the non-transitory computer-readable storage medium may be a ROM, a random access memory (RAM), a CD-ROM, a magnetic tape, a floppy disc, an optical data storage device, and the like.

It is further understood that "a plurality" in this disclosure refers to two or more, and other quantifiers are similar thereto. "And/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that the meaning of terms such as "in response to", "if", and the like involved in the present disclosure will depend on the context and the actual use scenario. As used herein, the term "in response to" may be construed to mean "when" or "upon" or "if" or "in a case where" depending on the context.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for reporting power information, performed by a terminal and comprising:
determining power domain enhancement information of multiple carriers/cells with a carrier aggregation (CA) or dual connection (DC) configuration in a case where a network device predefines or configures the terminal to report multiple power headroom reports (PHRs); and
reporting the power domain enhancement information of the multiple carriers/cells via a PHR from a media-access-control control element (MAC-CE) in an enhanced manner.

2. The method according to claim 1, wherein the power domain enhancement information at least comprises maximum power reduction (MPR) information of the multiple carriers/cells, and the MPR information is determined based on specific absorption rate (SAR) requirements or maximum permissible exposure (MPE) requirements.

3. The method according to claim 2, wherein the power domain enhancement information comprises one of following combinations of the MPR information of the multiple carriers/cells:
the MPR information determined based on the SAR requirements and the MPR information determined based on the SAR requirements;
the MPR information determined based on the SAR requirements and the MPR information determined based on the MPE requirements; or
the MPR information determined based on the MPE requirements and the MPR information determined based on the MPE requirements.

4. The method according to claim 1, wherein the power domain enhancement information of the multiple carriers/cells is carried in multiple PHRs, and each PHR in the multiple PHRs corresponds to one carrier/cell in the multiple carriers/cells;
the power domain enhancement information carried in each PHR in the multiple PHRs comprises:
a power headroom (PH) value or a PH mapping value;
MPR information; and
maximum transmit power information corresponding to a power class (PC) of the terminal, the maximum transmit power information comprising a maximum transmit power value, a maximum transmit power mapping value, or a maximum transmit power change adjustment amount.

5. The method according to claim 4, wherein the multiple PHRs are carried in a single MAC-CE signaling.

6. The method according to claim 4, wherein the multiple PHRs are carried in multiple MAC-CE signalings, and each MAC-CE signaling corresponds to one PHR.

7. The method according to claim 5 or 6, wherein the PH value or the PH mapping value is calculated based on a physical uplink shared channel (PUSCH) on which a corresponding carrier or cell actually performs a transmission, or based on a PUSCH reference configuration of a corresponding carrier or cell.

8. The method according to claim 7, wherein the MPR information is carried in a first indication field of the PHR, and a second indication field of the PHR indicates whether a SAR-based MPR reporting occurs, in response to the MPR information being determined based on SAR requirements.

9. The method according to claim 8, wherein the first indication field is an MPE indication field or a newly added indication field of the PHR.

10. The method according to claim 8 or 9, wherein the second indication field is a P indication field, a reserved indication field or a newly added indication field of the PHR.

11. The method according to claim 5 or 6, wherein the maximum transmit power information corresponding to the power class of the terminal comprises:
maximum transmit power information of each corresponding carrier/cell with the CA or DC configuration.

12. The method according to claim 11, further comprising:
reporting information of a carrier or cell whose transmit power class changes.

13. The method according to claim 12, wherein the information of the carrier/cell whose transmit power class changes is reported based on the PHR.

14. The method according to claim 12 or 13, wherein the information of the carrier/cell whose transmit power class changes is carried in a redefined indication field, a reserved indication field, or a newly added indication field of the PHR.

15. The method according to claim 14, wherein the newly added indication field indicates a PC change status of each carrier/cell with a code point or a bitmap.

16. A method for reporting power information, performed by a network device and comprising:
receiving power domain enhancement information of multiple carriers/cells reported by a terminal in an enhanced manner via a power headroom report (PHR) of a media-access-control control element (MAC-CE) in a case where the network device predefines or configures the terminal to report multiple PHRs.

17. The method according to claim 16, wherein the power domain enhancement information at least comprises maximum power reduction (MPR) information of the multiple carriers/cells, and the MPR information is determined based on specific absorption rate (SAR) requirements or maximum permissible exposure (MPE) requirements.

18. The method according to claim 17, wherein the power domain enhancement information comprises one of following combinations of the MPR information of the multiple carriers/cells:
the MPR information determined based on the SAR requirements and the MPR information determined based on the SAR requirements;
the MPR information determined based on the SAR requirements and the MPR information determined based on the MPE requirements; or
the MPR information determined based on the MPE requirements and the MPR information determined based on the MPE requirements.

19. The method according to claim 16, wherein the power domain enhancement information of the multiple carriers/cells is carried in multiple PHRs, and each PHR in the multiple PHRs corresponds to one carrier/cell in the multiple carriers/cells;
the power domain enhancement information carried in each PHR in the multiple PHRs comprises:
a power headroom (PH) value or a PH mapping value;
MPR information; and
maximum transmit power information corresponding to a power class (PC) of the terminal, the maximum transmit power information comprising a maximum transmit power value, a maximum transmit power mapping value, or a maximum transmit power change adjustment amount.

20. The method according to claim 19, wherein the multiple PHRs are carried in a single MAC-CE signaling.

21. The method according to claim 19, wherein the multiple PHRs are carried in multiple MAC-CE signalings, and each MAC-CE signaling corresponds to one PHR.

22. The method according to claim 20 or 21, wherein the PH value or the PH mapping value is calculated based on a physical uplink shared channel (PUSCH) on which a corresponding carrier or cell actually performs a transmission, or based on a PUSCH reference configuration of a corresponding carrier or cell.

23. The method according to claim 22, wherein the MPR information is carried in a first indication field of the PHR, and a second indication field of the PHR indicates whether a SAR-based MPR reporting occurs, in response to the MPR information being determined based on SAR requirements.

24. The method according to claim 23, wherein the first indication field is an MPE indication field or a newly added indication field of the PHR.

25. The method according to claim 23 or 24, wherein the second indication field is a P indication field, a reserved indication field or a newly added indication field of the PHR.

26. The method according to claim 20 or 21, wherein the maximum transmit power information corresponding to the power class of the terminal comprises:
maximum transmit power information of each corresponding carrier/cell with a carrier aggregation (CA) or dual connection (DC) configuration.

27. The method according to claim 26, further comprising:
receiving information of a carrier or cell whose transmit power class changes that is sent by the terminal.

28. The method according to claim 27, wherein the information of the carrier/cell whose transmit power class changes is reported based on the PHR.

29. The method according to claim 27 or 28, wherein the information of the carrier/cell whose transmit power class changes is carried in a redefined indication field, a reserved indication field, or a newly added indication field of the PHR.

30. The method according to claim 29, wherein the newly added indication field indicates a PC change status of each carrier/cell with a code point or a bitmap.

31. An apparatus for reporting power information, applied to a terminal and comprising:
a determining module configured to determine power domain enhancement information of multiple carriers/cells with a carrier aggregation (CA) or dual connection (DC) configuration in a case where a network device predefines or configures the terminal to report multiple power headroom reports (PHRs);
a sending module configured to report the power domain enhancement information of the multiple carriers/cells via a PHR from a media-access-control control element (MAC-CE) in an enhanced manner.

32. An apparatus for reporting power information, applied to a network device and comprising:
a receiving module configured to receive power domain enhancement information of multiple carriers/cells reported by a terminal in an enhanced manner via a power headroom report (PHR) from a media-access-control control element (MAC-CE) in a case where the network device predefines or configures the terminal to report multiple PHRs.

33. A device for reporting power information, comprising:
a processor; and
a memory for storing instructions executable by the processor;
wherein the processor is configured to perform the method for reporting power information according to any one of claims 1 to 15.

34. A device for reporting power information, comprising:
a processor; and
a memory for storing instructions executable by the processor;
wherein the processor is configured to perform the method for reporting power information according to any one of claims 16 to 30.

35. A storage medium having stored therein instructions that, when executed by a processor of a terminal, cause the terminal to perform the method for reporting power information according to any one of claims 1 to 15.

36. A storage medium having stored therein instructions that, when executed by a processor of a network device, cause the network device to perform the method for reporting power information according to any one of claims 16 to 30.
